# EUROPEAN PATENT APPLICATION

(11) **EP 4 588 747 A1**
(43) Date of publication of application: **23.07.2025**
(21) Application number: 25151998.9
(22) Date of filing: 15.01.2025
(51) Int. Cl.: B61D 27/00, F16L 9/00, F16L 55/027, F16L 55/033, F24F 7/04, F24F 13/02, F24F 13/24

(54) **NOISE REDUCTION STRUCTURE FOR AIR CIRCULATION DUCT**

(30) Priority: 16.01.2024 KR 20240006460 U
(71) Applicant: Korea Railroad Research Institute, Uiwang-si, Gyeonggi-do 16105 (KR)
(72) Inventor: Noh, Hee Min, Suwon-si, Gyeonggi-do (KR)
(74) Representative: Bryn Aarflot AS

(57) **Abstract**

The present invention relates to a noise reduction structure for an air circulation duct including an upper duct (100) which forms an upper wall and both side walls of a duct and in which an opening is formed to face downward, a lower duct (200) detachably mounted on the opening of the upper duct and forming a lower wall of a flow path, a plurality of central splitters (210) mounted apart from each other in a longitudinal direction of the flow path in which air flows, a front splitter (220) disposed in front of the central splitters, and a rear splitter (230) disposed on an upper surface of the lower duct to be disposed behind the central splitters.

## Description

### CROSS-REFERENCE TO RELATED APPLICATION

This application claims priority to and the benefit of Korean Patent Application No. 2024-0006460, filed on Jan. 16, 2024, the disclosure of which is incorporated herein by reference in its entirety.

### BACKGROUND

### 1. Field of the Invention

The present invention relates to a duct which is connected to an air circulation apparatus of a railway vehicle and circulates indoor and outdoor air of a train, and more specifically, to a noise reduction structure for an air circulation duct including an upper duct which forms an upper wall and both side walls of a duct and in which an opening is formed to face downward, a lower duct detachably mounted on the opening of the upper duct and forming a lower wall of a flow path, a plurality of central splitters mounted apart from each other in a longitudinal direction of the flow path in which air flows, a front splitter disposed in front of the central splitters, and a rear splitter mounted on an upper surface of the lower duct to be disposed behind the central splitters.

### 2. Discussion of Related Art

Air flows through a duct mounted in a railway vehicle when indoor air is conditioned using an air conditioner installed in the vehicle. Since the air conditioner of the railway vehicle is installed on the roof of a passenger-car, the duct is installed under the roof inside the railway vehicle to improve utilization of a limited space of the railway vehicle by minimizing a length of the duct.

Noise can be generated by friction occurring due to the air flowing at a high speed in the duct, and the noise can be reflected by and amplified along an inner wall of the duct due to characteristics of a form of the closed duct, which causes discomfort for passengers.

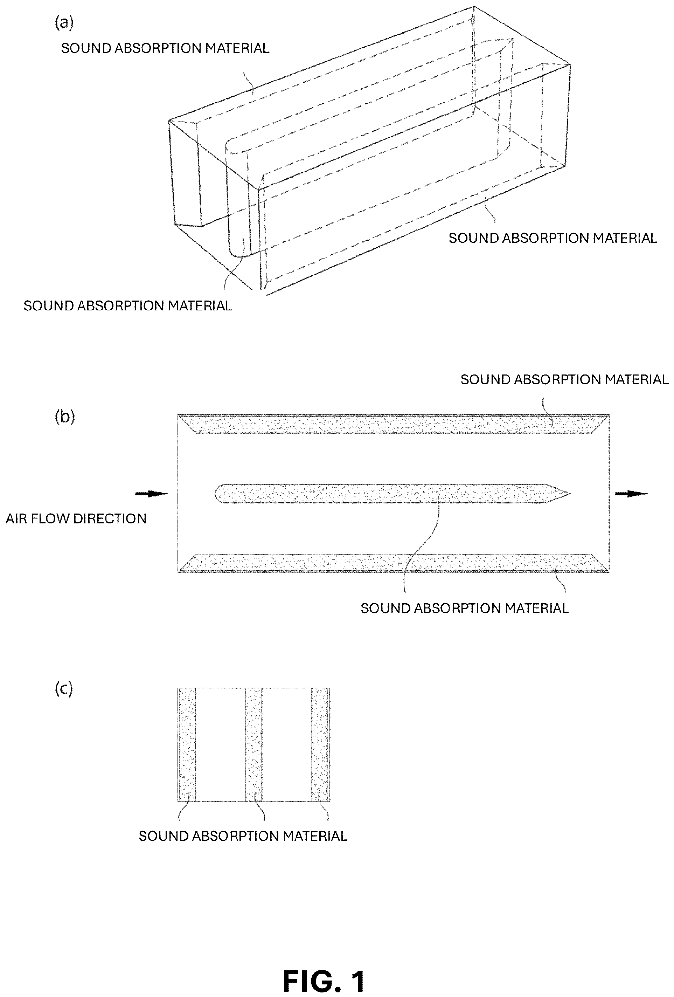

Accordingly, in "Ducted noise absorptive noise damper" of Korean Patent Publication No. 10-0392426 (July 10, 2003), a sound-absorbing material such as fibers is applied on surfaces of splitters to reduce noise. As illustrated in FIG. 1, the splitters are disposed in a central portion and on both side surfaces of a duct to be spaced predetermined distances from each other.

When the inside of a train is cooled or heated, a difference in temperature between a surface of the duct and air flowing through the duct can occur, which can cause moisture in the air flowing through the duct to condense, and the sound-absorbing material applied on the surfaces of the splitters can absorb the moisture.

When the sound-absorbing material has absorbed the moisture and a long time has elapsed, the sound-absorbing material can harden, the absorption performance of the sound-absorbing material can be significantly reduced, and a bad smell due to mold may occur. In this case, the sound-absorbing material should be replaced, but since the duct is formed as a structure in which the sound-absorbing material cannot be replaced after the duct is installed, there is a problem that a portion of the entire duct on which the sound-absorbing material is applied should be replaced.

### [Related Art]

### [Patent Document]

Korean Patent Publication No. 10-0392426 (Published on July 10, 2003)

### SUMMARY OF THE INVENTION

The present invention is directed to preventing a noise reduction effect from being reduced due to moisture absorption of a sound-absorbing material and to facilitate maintenance of a duct by forming a noise reduction structure in the duct without a sound-absorbing material of a fiber material.

According to an aspect of the present invention, there is provided a noise reduction structure for an air circulation duct, which includes an upper duct which forms an upper wall and both side walls of a flow path having a quadrangular cross-sectional shape formed in a duct and in which an opening is formed to face a lower side of the flow path, a lower duct which is detachably mounted on the opening of the upper duct and forms a lower wall of the flow path, a fixing part which fixes the upper duct and the lower duct to each other or releases a fixed state, central splitters which are formed of a plurality of members mounted apart from each other on an upper surface of the lower duct in the flow path in a longitudinal direction of an air flow and of which upper ends are connected to an upper inner surface of the upper duct, a front splitter which is mounted on the upper surface of the lower duct to be disposed in front of the central splitters in the flow path in an air flow direction and of which an upper end is connected to the upper inner surface of the upper duct, and a rear splitter which is mounted on the upper surface of the lower duct to be disposed behind the central splitters in the flow path in the air flow direction and of which an upper end is connected to the upper inner surface of the upper duct.

According to the embodiment of the present invention, the front splitter may be formed in a curved shape in which a surface of a central portion of the front splitter in a width direction of the flow path is convex forward in a longitudinal direction of an air flow.

According to the embodiment of the present invention, the rear splitter may be formed in a cross-sectional shape of a wedge shape of an isosceles inclined surface such that an outer vertex angle is disposed to face rearward in a longitudinal direction of an air flow at a central portion of the rear splitter in a width direction of the flow path.

According to the embodiment of the present invention, a rear central portion of the front splitter, front and rear central portions of the central splitters disposed adjacent to each other, and a front central portion of the rear splitter may be connected to each other through a partition wall formed in a panel shape extending in a vertical direction of the duct and a longitudinal direction of the duct, and a space formed between the splitters may be divided into two sides in a width direction of the flow path by the partition wall.

According to the embodiment of the present invention, both ends of the central splitters in a width direction of the flow path may be inclined at a predetermined angle in the flow path to face rearward in the air flow direction.

According to the embodiment of the present invention, the front splitter may be formed as a hollow structure, and a plurality of holes through which an inside and an outside of the front splitter communicate may be formed to pass through a surface of the front splitter.

According to the embodiment of the present invention, each of the central splitters may be formed as a hollow structure, and a plurality of holes through which an inside and an outside of the central splitter communicate may be formed to pass through a surface of the central splitter.

According to the embodiment of the present invention, a pair of side splitters, which protrude toward a central portion of the central splitters in a width direction of the flow path to be spaced a predetermined distance from both end portions of the central splitters, may be formed on both end portions of the upper surface of the lower duct in the width direction of the flow path to be disposed in a longitudinal direction of the flow path, and inclined surfaces forming obtuse angles with respect to inner surfaces of side walls of the upper duct may be formed on front and rear ends of the side splitters in the flow path in the air flow direction.

According to the embodiment of the present invention, the central splitters may be formed such that inclination angles formed at both ends of the central splitters in the width direction of the flow path are adjusted.

According to the embodiment of the present invention, a separation distance between the central splitters disposed adjacent to each other may be adjusted.

According to the embodiment of the present invention, each of the side splitters may be formed as a hollow structure, and a plurality of holes through which an inside and an outside of the side splitter communicate may be formed to pass through a surface of the side splitter.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating a layout and a shape of a conventional splitter applied to a duct;
FIGS. 2 and 3 are views illustrating a structure of a duct and a layout of a splitter in the duct according to the present invention;
FIG. 4 is a view for comparing an air flow and noise propagation simulation model interpretation result of a model in which a length of a central splitter is reduced in an air flow direction in a conventional method with an air flow and noise propagation simulation interpretation result of a model in which a central splitter is omitted;
FIGS. 5 to 7 are views each illustrating a shape and a layout of a splitter according to an embodiment of the present invention;
FIG. 8 is a view illustrating examples of inclination angle adjustment of a central splitter with adjustable inclination angle according to the present invention;
FIG. 9 is a view illustrating examples of separation distance adjustment of a central splitter with adjustable separation distance according to the present invention;
FIG. 10 is a view illustrating examples of an inclination angle adjustable structure of the central splitter according to the present invention;
FIG. 11 is a view illustrating an example of a separation distance adjustable structure of the central splitter according to the present invention;
FIG. 12 is a view for comparing air flow simulation interpretation results in ducts according to the conventional splitter model and a splitter model of the present invention;
FIG. 13 is a view illustrating a noise reduction simulation interpretation result in a duct formed as the splitter model according to the present invention; and
FIG. 14 is a view illustrating a sound pressure level simulation interpretation result in the duct formed as the splitter model according to the present invention.

### DETAILED DESCRIPTION OF EXEMPLARY EMBODIMENTS

Hereinafter, embodiments of the present invention will be described with reference to the accompanying drawings.

The following description will focus on portions necessary to understand operations and actions according to the present invention.

While the embodiments of the present invention are described, description of technical content which is well known in the art and not directly related to the present invention will be omitted.

This is to more clearly provide the gist of the present invention without obscuring the gist by omitting unnecessary descriptions.

In addition, in description of components of the present invention, a different reference numeral may be assigned to the same component in different drawings, or the same reference numeral may be assigned to the same component in different drawings.

However, this does not mean that the component has different functions in the embodiments or that the component has the same function in the different embodiments. Functions of each component may be determined based on descriptions of each component in the corresponding embodiment.

In addition, unless otherwise defined, all technical terms used herein should be interpreted to have customary meanings to those skilled in the art to which this invention belongs and should not be interpreted with overly idealized or reduced meanings.

In addition, the singular forms "a," "an," and "the" used in the present specification are intended to include the plural forms as well, unless the context clearly indicates otherwise.

The terms "comprises," "comprising," "includes," and/or "including" used in this disclosure should be interpreted as specifying that components or various operations may not include all of the stated components or various operations, may not include some components and operations, or may further include additional components and operations.

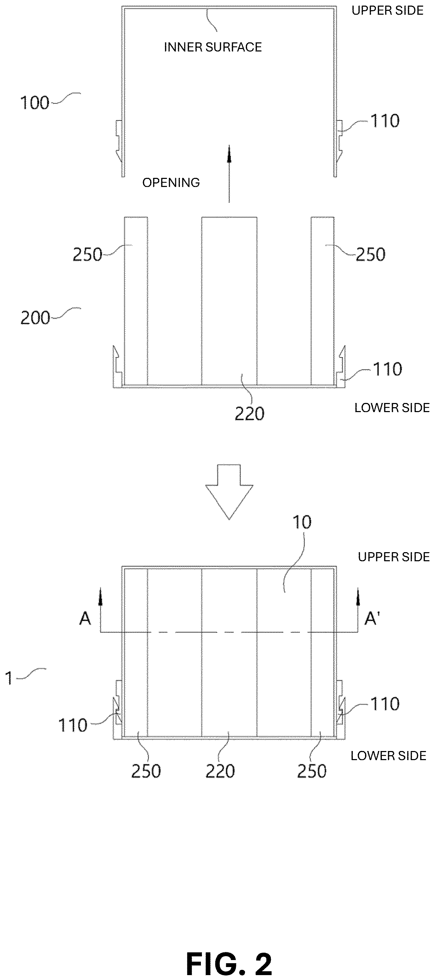

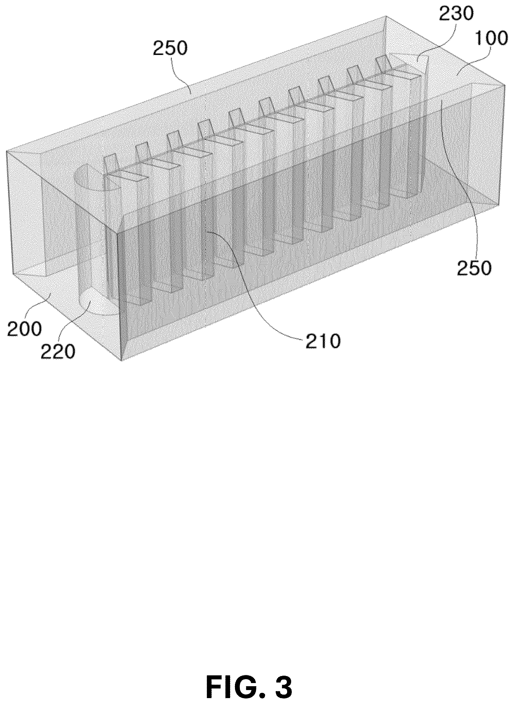

In a noise reduction structure for an air circulation duct according to the present invention, as illustrated in FIGS. 2 and 3, a duct 1 includes an upper duct 100 in which a flow path 10 is formed in a quadrangular cross-sectional shape and which forms an upper wall and both side walls of the flow path 10 and a lower duct 200 which forms a lower wall of the flow path 10.

An opening is formed to face a lower side of the flow path 10 of the upper duct 100, so that the upper duct 100 is formed to have a " 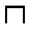 " cross-sectional shape. The lower duct 200 is detachably mounted on the opening of the upper duct 100.

A fixing part 110, which may fix the upper duct 100 and the lower duct 200 to each other or release a fixed state of the upper duct 100 and the lower duct 200 to separate the lower duct 200 therefrom, is mounted on a side surface of the duct 1.

A splitter, which prevents noise generated due to friction of air flowing through the flow path 10 from being reflected and amplified by an inner wall of the duct 1 and propagated to an indoor space, may be mounted in the duct 1, and moisture contained in the air flowing in the duct 1 may condense while in contact with the low-temperature inner wall of the duct 1 or a low-temperature surface of the splitter.

Since the condensed moisture causes generation of a bad smell due to generation of mold in the duct 1, a maintenance operation of separating the splitter from the duct 1 and washing or replacing the splitter needs to be performed periodically.

In this case, since the duct 1 is typically fixedly installed close to a lower surface of a roof in order to optimize the utilization of a limited inner space, the upper duct 100 is fixedly installed on a lower portion of the roof, and the lower duct 200 is connected to the fixedly installed upper duct 100 to be coupled to or separated from a lower portion of the upper duct 100.

Accordingly, the splitter is formed on an upper surface of the lower duct 200 such that the fixing part 110 is released to separate the lower duct 200 from the upper duct 100 to easily perform the maintenance on the splitter.

A rail and a slider, which guide vertical sliding, may be formed on a connecting part between the upper duct 100 and the lower duct 200 such that the upper duct 100 and the lower duct 200 are easily separated from and recoupled to each other.

The splitter is formed of a front splitter 220, central splitters 210, and a rear splitter 230 sequentially disposed apart from each other along the flow path 10 in an air flow direction, and the front splitter 220, the central splitters 210, and the rear splitter 230 are disposed to be located in a central portion of the flow path 10 in a width direction.

Separation gaps between the front splitter 220, the central splitters 210, and the rear splitter 230 form a resonance type sound absorption structure, in which noise generated due to friction of the flowing air resonates to offset wavelengths of main frequency bends of the noise in the gaps between the splitters, to secure noise reduction performance even without applying a sound-absorbing material such as fibers to the splitters.

The front splitter 220 is disposed in front of the central splitters 210 along the flow path 10 in the air flow direction, and an upper end of the front splitter 220 is connected thereto to be close to an upper inner surface of the upper duct 100 to prevent the air flowing in the flow path 10 from leaking through a gap between the front splitter 220 and the upper duct 100.

The central splitters 210 are mounted such that a plurality of members are disposed apart from each other along the flow path 10 in the air flow direction, upper ends of the central splitters 210 are connected to be close to the upper inner surface of the upper duct 100 to prevent the air flowing through the flow path 10 from leaking through gaps between the central splitters 210 and the upper duct 100.

The rear splitter 230 is disposed behind the central splitters 210 along the flow path 10 in the air flow direction, an upper end of the rear splitter 230 is connected thereto to be close to the upper inner surface of the upper duct 100 to prevent the air flowing in the flow path 10 from leaking through a gap between the rear splitter 230 and the upper duct 100.

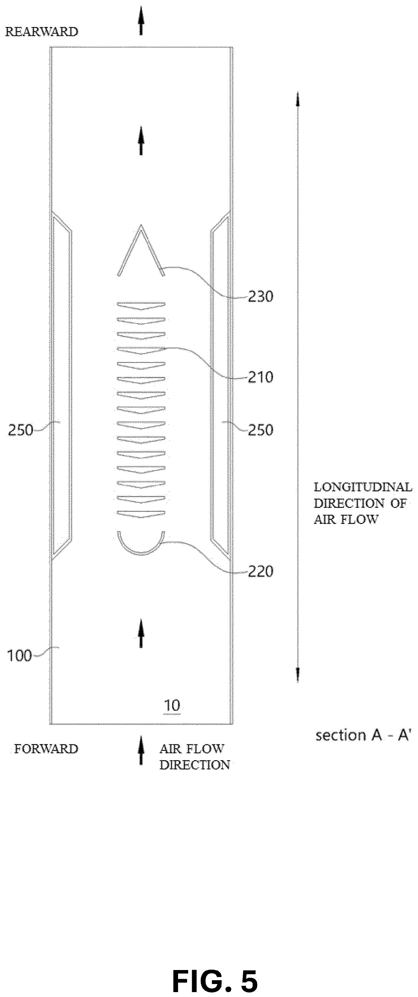

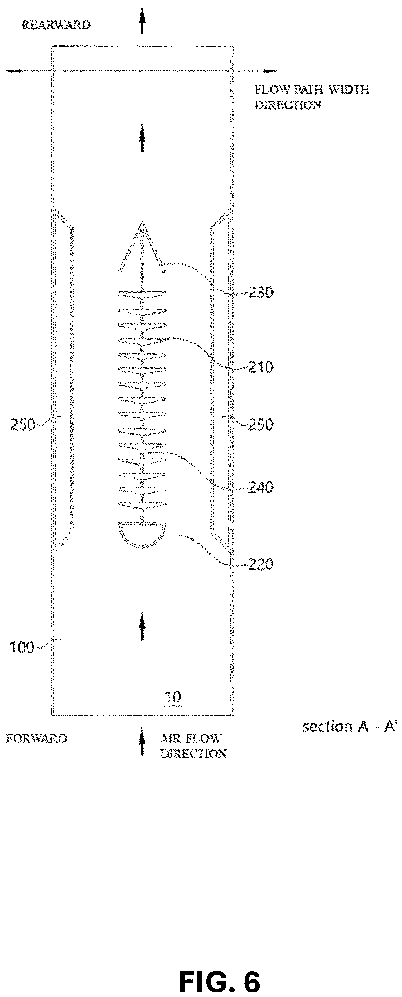

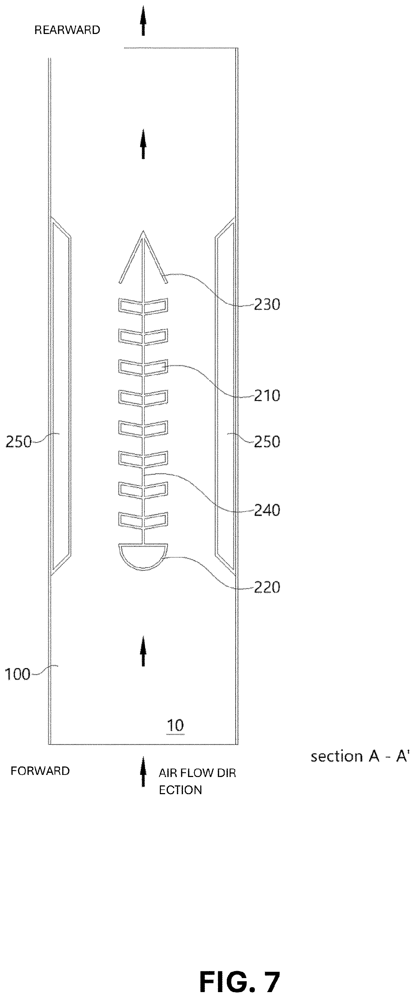

In addition, as illustrated in FIGS. 5 to 7, in the front splitter 220, a central portion of the front splitter 220 is formed in a forwardly convex curved shape in which a surface of the central portion of the front splitter 220 in the width direction of the flow path 10 opposite to a flow of the air in the flow path 10 convexly protrudes forward in a longitudinal direction of an air flow and a surface of an edge of the front splitter 220 toward the side surface of the flow path 10 in the width direction is inclined to face rearward in the longitudinal direction of the air flow.

In this case, the convexly curved shape formed at a front side of the front splitter 220 reduces a drag applied to each splitter by the air passing through the inside of the flow path 10 to reduce an amount of noise generated in the duct 1, and a shape that prevents a decrease in flow rate of the flowing air in the flow path 10 or prevents an increase in noise generation is applied to a rear surface of the front splitter 220 facing a front surface of the central splitters 210.

As an example, one of various shapes such as a cylindrical shape, a cross-sectional waterdrop cylindrical shape with a pointed rear side, and a cylindrical arc shape with a concavely curved shape coaxial with a front cross-sectional shape may be applied to a cross-sectional shape of the front splitter 220.

In addition, the rear splitter 230 is formed in a cross-sectional shape of a wedge shape of an isosceles inclined surface such that an outer vertex angle is disposed at a central portion of the rear splitter 230 in the width direction of the flow path 10 to face rearward in the longitudinal direction of the air flow in order to prevent a decrease in flow rate of the flowing air in the flow path 10 or prevent an increase in noise generation due to generation of turbulence of the flowing air flowing through a rear end of the rear splitter 230.

As an example, the cross-sectional shape of the front splitter 220 may be a triangular cross-sectional shape in which a front side of the rear splitter 230 facing a rear surface of the central splitter 210 is closed or an inequality-sign (>) cross-sectional shape in which the front side of the rear splitter 230 is open.

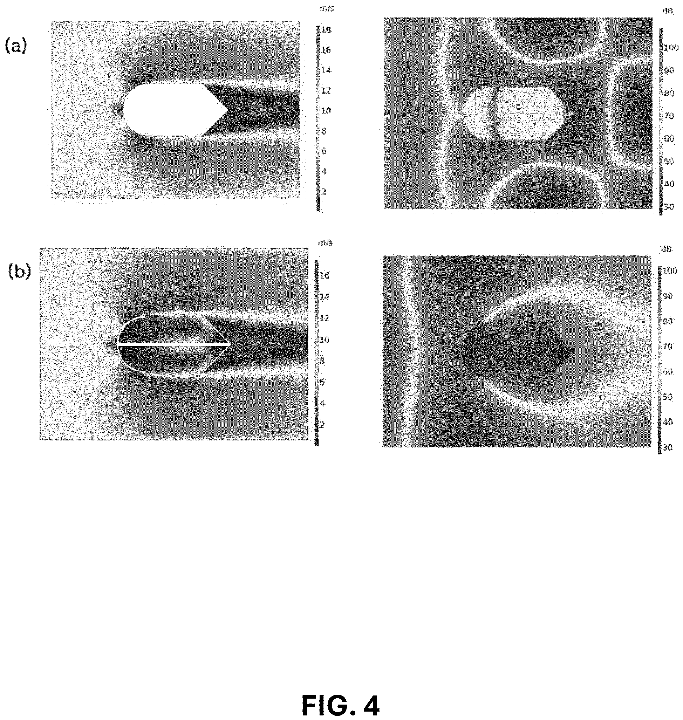

As illustrated in FIG. 4, from an air flow and noise propagation simulation interpretation result of a model in which only the front splitter 220 and the rear splitter 230 are disposed without arranging the central splitters 210, it can be seen that a spaced layout of the central splitters 210 does not significantly affect a flow of air flowing in the flow path 10 when compared to an air flow and noise propagation simulation model interpretation result of a model in which a length of the conventional central splitter is reduced in an air flow direction.

In addition, a rear central portion of the front splitter 220, front and rear central portions of the central splitters 210 disposed adjacent to each other, and a front central portion of the rear splitter 230 may be formed to be connected to each other through a partition wall 240, and the partition wall 240 may be formed in a panel shape extending in a vertical direction of the duct 1 and a longitudinal direction of the duct 1, so that a space formed between the splitters is divided by the partition wall 240 into two sides in the width direction of the flow path 10.

As the front splitter 220, the central splitters 210, and the rear splitter 230 are connected to each other through the partition wall 240, the splitters may be formed in a fish bone shape.

A fish bone structure of the splitters may prevent air from flowing between gaps between the front splitter 220, the central splitters 210, and the rear splitter 230, which are disposed apart from each other, to allow the air passing through the splitters to flow more smoothly and may form the resonance type sound absorption structure in which both sides are symmetrical in the width direction of the flow path 10 to prevent an increase in magnitude of noise due to interference between noise generated on both sides of the flow path 10 in the width direction.

In addition, both ends of the central splitters 210 in the width direction of the flow path 10 may be disposed to be inclined in the flow path 10 at a predetermined angle to face rearward in the air flow direction to reduce a magnitude of a drag generated by the air flowing through the flow path 10 and reduce noise generation due to the generated drag.

In addition, each of the front splitter 220, the central splitters 210, and the rear splitter 230 may be formed in a hollow structure of a closed column shape in which a space is formed, and the front splitter 220, the central splitter 210, or the rear splitter 230 may be formed in a thin board shape having a predetermined thickness and formed as a porous structure in which a plurality of holes, which connect inner spaces of the splitters and an inner space of the flow path 10, are formed.

The porous hollow column shape structure of the front splitter 220, the central splitter 210, or the rear splitter 230 may allow the flowing air to be introduced into the inner spaces of the porous splitter through the holes and sound to be absorbed using resonance in the inner spaces of the porous splitter to improve the noise reduction performance of the splitters.

The porous structure of the front splitter 220, the central splitter 210, or the rear splitter 230 may be formed to have a porosity, which is a ratio of a cross-sectional area of the holes to an entire cross-sectional area of the splitter, of 1 to 5%.

A degree of the porosity may be adjusted using sizes of the holes or the number of the holes, and a magnitude of noise for each frequency band of the noise generated in the duct 1 may be adjusted according to a change in the porosity.

As an example of the present invention, as a result of a sound test using the splitters with the porous structure having the porosity of 5%, a transmission loss of 37 dB or more may be obtained in a noise frequency band of 250 Hz which is a low-frequency band, and the transmission loss shows improvement of 15 dB or more with respect to a splitter having the same shape in which the porous structure is not adopted.

In addition, a transmission loss of 45 dB or more may be obtained in a noise frequency band of 2500 Hz which is a high-frequency band, and the transmission loss shows improvement of 10 dB or more with respect to the splitter having the same shape in which the porous structure is not adopted.

In addition, a pair of side splitters 250 may be formed to protrude from both end portions of the upper surface of the lower duct 200 in the width direction of the flow path 10 to be disposed in the longitudinal direction of the flow path 10, and inner surfaces of the side splitters 250 are disposed to be spaced a predetermined distance from both end portions of the central splitters 210 in the width direction of the flow path 10.

Inclined surfaces forming obtuse angles with respect to inner surfaces of side walls of the upper duct 100 are formed on front and rear ends of the side splitters 250 along the flow path 10 in the air flow direction to prevent noise from being generated due to air resistance at ends of the side splitters 250.

The side splitters 250 may absorb sound at a central portion of the side splitters 250 in the width direction of the flow path 10 and at an edge of the side splitters 250 in the width direction of the flow path 10 with the central splitters 210 to improve the sound absorption performance using the splitter.

Each of the side splitters 250 may be formed in a thin board shape with a hollow structure in which a space is formed and formed as a porous structure in which a plurality of holes which connect an inner space of the side splitter 250 and the inner space of the flow path 10 are formed.

The porous structure of the side splitter 250 is formed to have a porosity, which is a ratio of a cross-sectional area of the holes to an entire cross-sectional area of the splitter, of 1 to 5%, and a magnitude of noise for each frequency band of the noise generated in the duct 1 may be adjusted by adjusting a degree of the porosity through the cross-sectional area of the holes or the number of the holes.

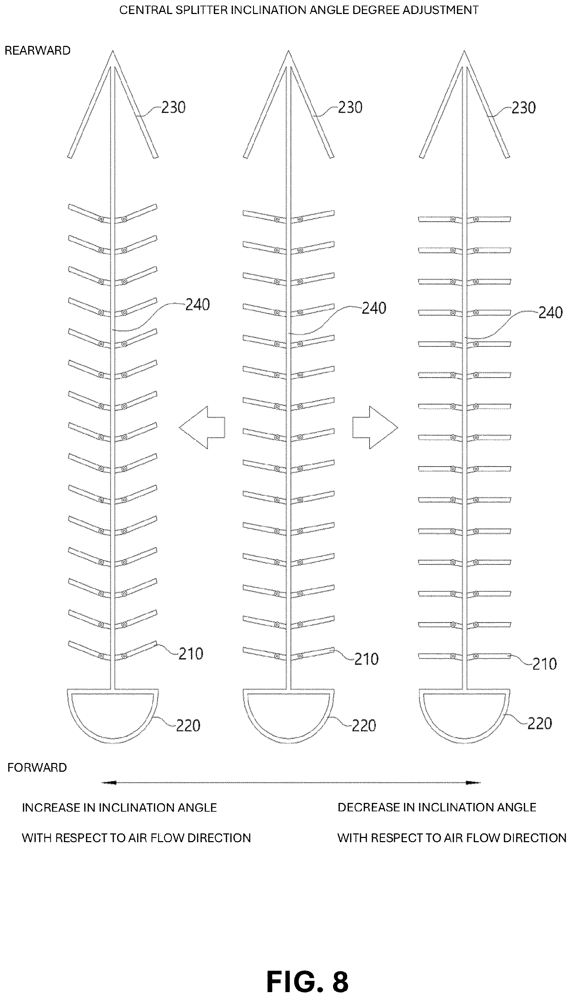

In addition, as illustrated in FIG. 8, each inclination angle formed at both ends of the central splitters 210 in the width direction of the flow path 10 may be adjusted, and the resonance type sound absorption structure formed by the splitters 210 may be deformed according to a change in shape and size of a space between the central splitters 210 which are disposed apart from each other by adjusting the inclination angle of the central splitter 210.

Due to the deformation of the resonance type sound absorption structure of the central splitter 210 according to the adjustment of the inclination angle of the central splitter 210, a magnitude of noise to be reduced using the splitters in a main frequency band may be finely adjusted, thereby further improving a resonance type sound absorption effect due to a frequency offset.

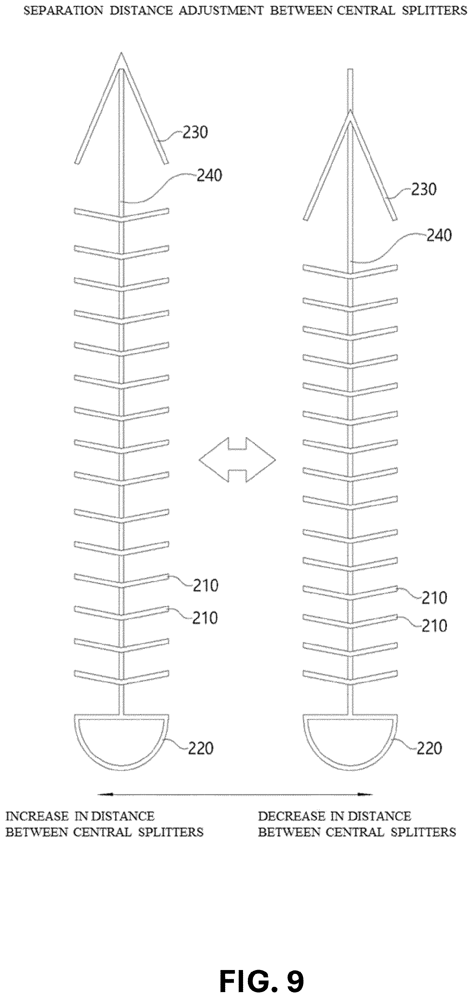

In addition, as illustrated in FIG. 9, arrangement gaps between the central splitters 210 disposed a predetermined distance from each other in a longitudinal direction of the air flow may be adjusted.

The adjustment of the arrangement gaps of the central splitters 210 may deform the resonance type sound absorption structure of the central splitters 210 to finely adjust the magnitude of the noise to be reduced using the splitter in the main frequency band, thereby further improving the resonance type sound absorption effect due to the frequency offset.

Particularly, a frequency of noise generated due to tolerances of the duct 1 and the splitters in the flow path 10 may vary according the duct 1, a width of a sound absorption frequency band of the splitters may be finely adjusted by the inclination angle adjustment of the central splitters 210 or the separation distance adjustment of the central splitters 210, and thus the sound absorption performance may be maximized regardless of a change in frequency of noise due to the tolerances of the duct 1 and the splitters.

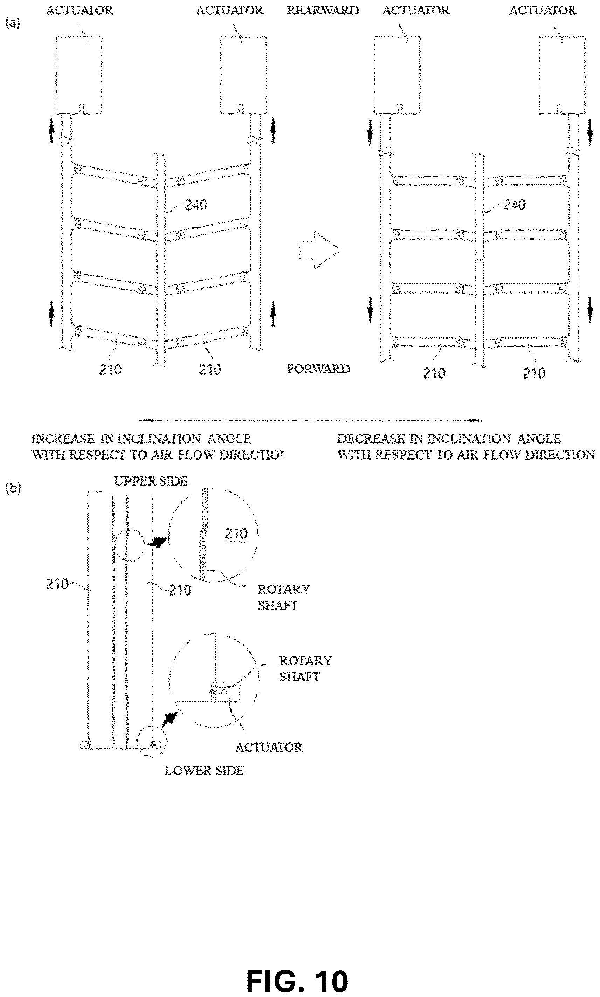

As an example of an inclination adjustment structure of the central splitters 210, as illustrated in FIG. 10, the central splitters 210 are formed of members which are separated from each other in the width direction of the flow path 10, and a central portion of the central splitters 210 which are separated from each other in the width direction of the flow path 10 may be rotatably connected through hinges vertically mounted on the duct 1.

Connecting rods are connected to edges at both sides of the central splitters 210 which are separately formed in the width direction of the flow path 10 to be rotatable at a predetermined angle, actuators which move forward or rearward in the longitudinal direction of the flow path 10 are connected to the connecting rods, and rotation angles of the central splitters 210 are controlled according to forward or rearward moving distances of the actuators.

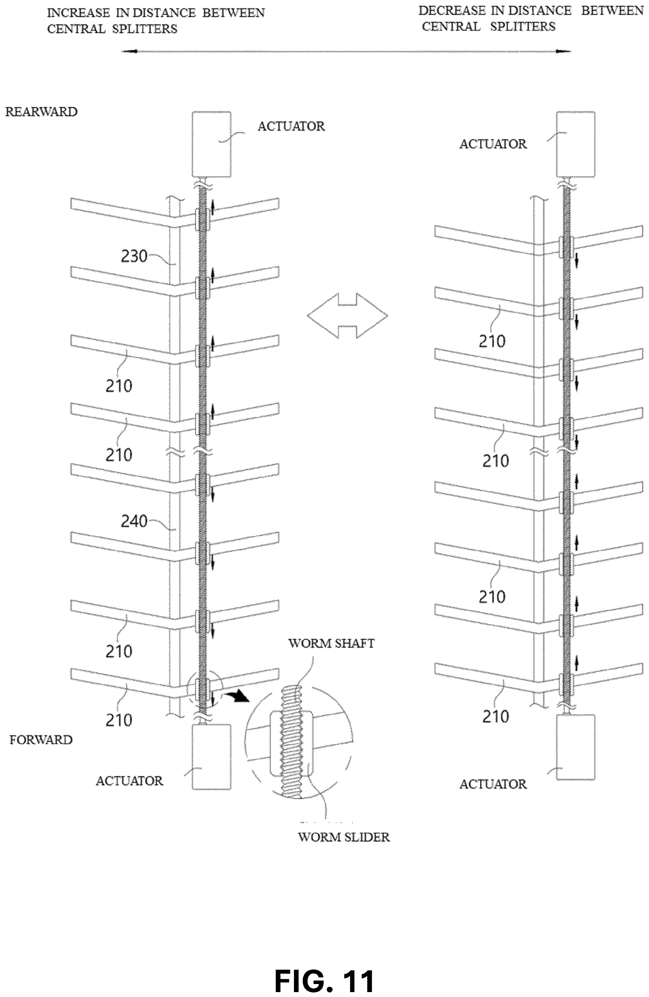

As an example of an arrangement distance adjustment structure of the central splitter 210, as illustrated in FIG. 11, the central splitters 210 may slidably move along the partition wall 240 in the longitudinal direction of the flow path 10, and a worm shaft on which a screw thread with a predetermined pitch is formed may be connected to a rotary shaft of the actuator for providing a rotary driving force.

A plurality of worm sliders in which screw thread holes corresponding to the screw thread pitch of the worm shaft are movably connected to the worm shaft, the worm sliders are fixedly connected to the central splitters 210, and the worm sliders move forward or rearward in the longitudinal direction of the flow path 10 according to a rotational direction of the actuator to adjust an arrangement distance between the central splitters 210.

In this case, in a case in which the same screw thread pitch were formed on all the worm shafts in a longitudinal direction, the worm sliders would move the same distance, and therefore it would not be possible to adjust arrangement distances between the central splitters 210, and thus the screw thread pitch of each of the worm shafts in the longitudinal direction is formed to vary, so that moving distances of the central splitters 210 are different from each other, and separation distances between the central splitters 210 disposed adjacent to each other may be formed to be equally increased or decreased.

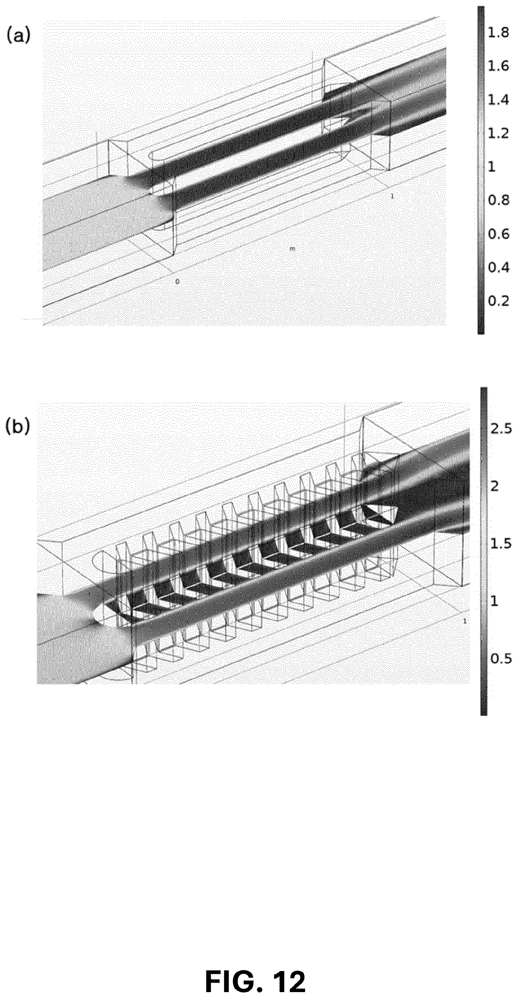

In addition, like an air flow simulation interpretation result in the duct of FIG. 12, it can be seen that a flow rate increases to a maximum of 1.96 times at a part to which the splitters are applied with respect to an input input flow rate of 1 in a duct to which a splitter formed of a conventional sound-absorbing material is applied.

In the duct 1 to which the splitter structure according to the present invention is applied, since friction due to a sound-absorbing material is not generated unlike the conventional duct, it can be seen that the flow rate increases to a maximum of 2.3 times at a part to which the splitters are applied with respect to the input input flow rate of 1, and a set pressure loss does not occur with respect to the conventional splitter structure.

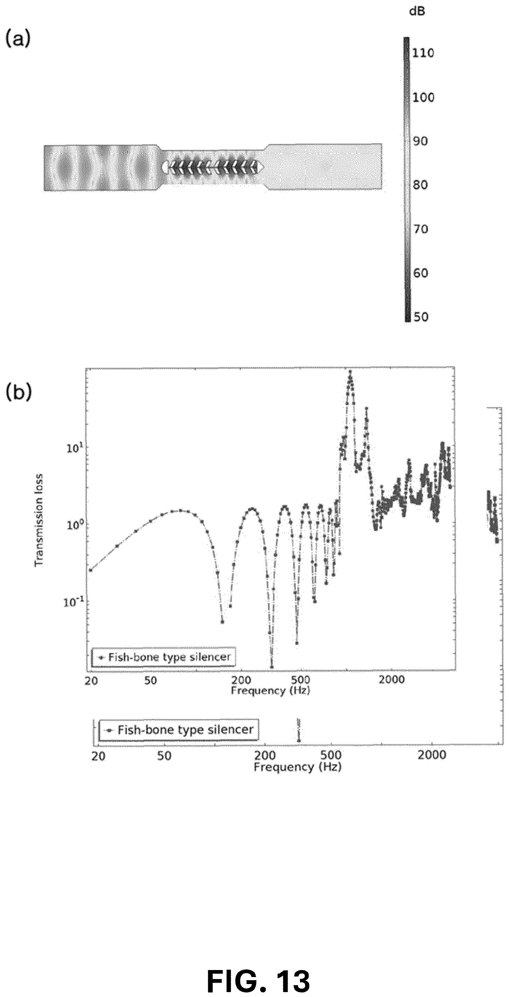

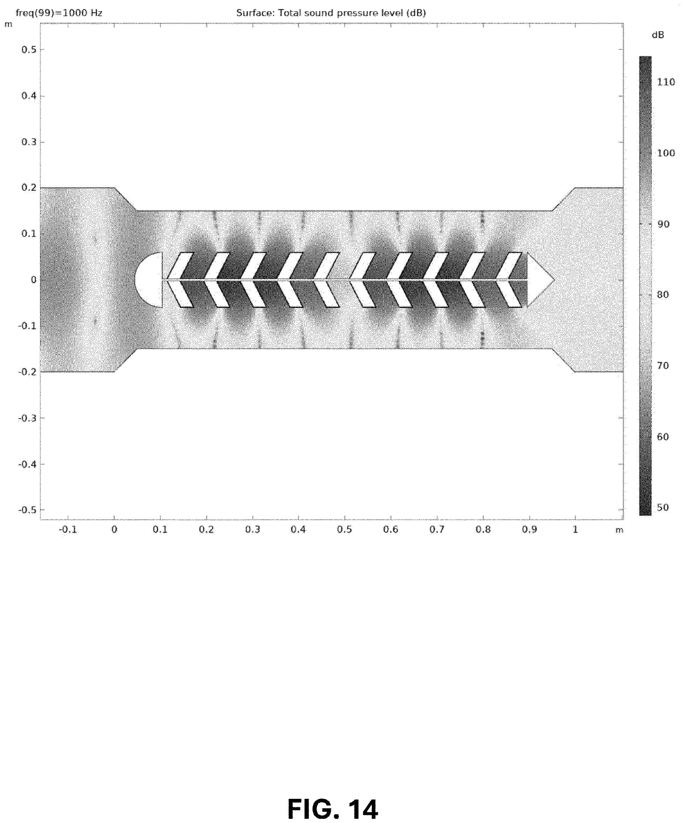

In addition, as illustrated in FIGS. 13 and 14, from a noise reduction and sound pressure level simulation interpretation result in the duct 1 formed according to a model in which the splitter structure according to the present invention is applied to the duct 1, it can be seen that a high transmission loss occurs in a frequency band of 1000 Hz, and thus a largest noise reduction effect close to 100 dB is obtained.

A splitter structure according to embodiments of the present invention has an effect of continuously maintaining air flow performance and noise reduction performance in a duct.

According to embodiments of the present invention, since a material of a splitter mounted in a duct is not a sound-absorbing material, there is an effect of preventing sound absorption performance reduction due to an increase in moisture in the sound-absorbing material according to condensation of the moisture in air and due to hardening of the sound-absorbing material according thereto.

According to embodiments of the present invention, there are effects that a duct can be easily separated to facilitate maintenance of a splitter and can prevent the generation of a bad smell due to mold generated by the moisture when the moisture condenses in the duct.

Although embodiments of the present invention have been described with reference to the above content, it will be understood by those skilled in the art that the invention may be performed in other specific forms without changing the technological scope or essential features.

Therefore, the above-described embodiments should be considered in a descriptive sense only and not for purposes of limitation, and the scope of the present invention is defined not by the detailed description but by the appended claims and encompasses all modifications or alterations derived from meanings and the scope of the appended claims, and equivalents thereof.

## Claims

1. A noise reduction structure for an air circulation duct, comprising:
an upper duct (100) which forms an upper wall and both side walls of a flow path (10) having a quadrangular cross-sectional shape formed in a duct (1) and in which an opening is formed to face a lower side of the flow path (10);
a lower duct (200) which is detachably mounted on the opening of the upper duct (100) and forms a lower wall of the flow path (10);
a fixing part (110) which fixes the upper duct (100) and the lower duct (200) to each other or releases a fixed state;
central splitters (210) which are formed of a plurality of members mounted apart from each other on an upper surface of the lower duct (200) in the flow path (10) in a longitudinal direction of an air flow and of which upper ends are connected to an upper inner surface of the upper duct (100);
a front splitter (220) which is mounted on the upper surface of the lower duct (200) to be disposed in front of the central splitters (210) in the flow path (10) in an air flow direction and of which an upper end is connected to the upper inner surface of the upper duct (100); and
a rear splitter (230) which is mounted on the upper surface of the lower duct (200) to be disposed behind the central splitters (210) in the flow path (10) in the air flow direction and of which an upper end is connected to the upper inner surface of the upper duct (100).

2. The noise reduction structure of claim 1, wherein the front splitter (220) is formed in a curved shape in which a surface of a central portion of the front splitter (220) in a width direction of the flow path (10) is convex forward in the longitudinal direction of the air flow.

3. The noise reduction structure of claim 1, wherein the rear splitter (230) is formed in a cross-sectional shape of a wedge shape of an isosceles inclined surface such that an outer vertex angle is disposed to face rearward in a longitudinal direction of an air flow at a central portion of the rear splitter (230) in a width direction of the flow path (10).

4. The noise reduction structure of claim 1, wherein:
a rear central portion of the front splitter (220), front and rear central portions of the central splitters (210) disposed adj acent to each other, and a front central portion of the rear splitter (230) are connected to each other through a partition wall (240) formed in a panel shape extending in a vertical direction of the duct (1) and a longitudinal direction of the duct (1); and
a space formed between the splitters is divided into two sides in a width direction of the flow path (10) by the partition wall (240).

5. The noise reduction structure of claim 1, wherein both ends of the central splitters (210) in a width direction of the flow path (10) are inclined at a predetermined angle in the flow path (10) to face rearward in the air flow direction.

6. The noise reduction structure of claim 1, wherein:
the front splitter (220) is formed as a hollow structure; and
a plurality of holes through which an inside and an outside of the front splitter (220) communicate are formed to pass through a surface of the front splitter (220).

7. The noise reduction structure of claim 1, wherein:
each of the central splitters (210) is formed as a hollow structure; and
a plurality of holes through which an inside and an outside of the central splitter (210) communicate are formed to pass through a surface of the central splitter (210).

8. The noise reduction structure of claim 1, wherein:
a pair of side splitters (250), which protrude toward a central portion of the central splitters (210) in a width direction of the flow path (10) to be spaced a predetermined distance from both end portions of the central splitters (210), are formed on both end portions of the upper surface of the lower duct (200) in the width direction of the flow path (10) to be disposed in a longitudinal direction of the flow path (10); and
inclined surfaces forming obtuse angles with respect to inner surfaces of side walls of the upper duct (100) are formed on front and rear ends of the side splitters (250) in the flow path (10) in the air flow direction.

9. The noise reduction structure of claim 5, wherein the central splitters (210) are formed such that inclination angles formed at both ends of the central splitters (210) in the width direction of the flow path (10) are adjusted.

10. The noise reduction structure of claim 5, wherein a separation distance between the central splitters (210) disposed adjacent to each other is adjusted.

11. The noise reduction structure of claim 8, wherein:
each of the side splitters (250) is formed as a hollow structure; and
a plurality of holes through which an inside and an outside of the side splitter (250) communicate are formed to pass through a surface of the side splitter (250).
